# EUROPÄISCHE PATENTANMELDUNG

(11) **EP 0 579 934 A1**
(43) Veröffentlichungstag der Anmeldung: **26.01.1994**
(21) Anmeldenummer: 93108664.9
(22) Anmeldetag: 28.05.1993
(51) Int. Cl.: G06F 15/16

(54) **Mehrprozessor-Computersystem**

(30) Priorität: 17.07.1992 DE 4223600
(71) Anmelder: International Business Machines Corporation, Armonk, N.Y. 10504 (US)
(72) Erfinder: Blum, Arnold, Dr., W-7268 Gechingen (DE); Goldrian, Gottfried, W-7030 Böblingen (DE); Kumpf, Wolfgang, W-7038 Holzgerlingen (DE)
(74) Vertreter: Schäfer, Wolfgang, Dipl.-Ing.

(57) **Zusammenfassung**

Die Erfindung betrifft die Übertragung von Dateninformationen bei einem Mehrprozessor-Computersystem. Sollen Dateninformationen zwischen zwei Prozessoreinheiten übertragen werden, so werden die zugehörigen Steuerinformationen auf einem Verbindungsbus bereitgestellt, damit danach die Dateninformationen über eine Schalteinheit von der ersten zur zweiten Prozessoreinheit übertragen werden können. Sollen hingegen Dateninformationen von einer sendenden Prozessoreinheit zu allen anderen Prozessoreinheiten übertragen werden (Broadcast-Übertragung), so werden nicht nur die Steuerinformationen, sondern auch die nachfolgenden Dateninformationen über den Verbindungsbus übertragen; eine Übertragung von Dateninformationen über die Schalteinheit erfolgt in diesem Fall nicht. Auf diese Weise ist es möglich den schaltungstechnischen und den programmtechnischen Aufwand für die Schalteinheit zu verringern.

## Beschreibung

Die Erfindung betrifft ein Computersystem mit wenigstens zwei Prozessoreinheiten. Derartige Computersysteme sind als Mehrprozessor-Computersysteme oder Parallelrechner-Computersysteme bekannt.

Jede Prozessoreinheit des Computersystems ist mit einer Torschaltung verbunden, die ihrerseits wiederum mit einer Schalteinheit und einem Verbindungsbus verbunden ist. Bei der Torschaltung handelt es sich um bekannte Schaltungen zur Übermittlung von Informationen. Die Schalteinheit kann in der Form von bekannten Netzwerkschaltern oder Matrixschaltern ausgeführt sein. Der Verbindungsbus besteht bekannterweise aus einer Anzahl paralleler Leitungen.

Sollen von einer ersten Prozessoreinheit Dateninformationen zu einer zweiten Prozessoreinheit übertragen werden, so ist es zuerst erforderlich, daß die erste Prozessoreinheit Steuerinformationen sendet, mit deren Hilfe die Verbindung zwischen der ersten und der zweiten Prozessoreinheit hergestellt wird. Zu diesem Zweck gelangen die Steuerinformationen über den Verbindungsbus zu einer Steuereinheit, die die gewünschte Verbindung in der Schalteinheit herstellt. Danach werden die zu übertragenden Dateninformationen von der ersten Prozessoreinheit über die Schalteinheit an die zweite Prozessoreinheit gesendet, ohne dabei den Verbindungsbus zu tangieren.

Bei einem derartigen Computersystem ist es häufig erforderlich, daß Dateninformationen nicht nur von einer ersten Prozessoreinheit an eine zweite Prozessoreinheit übertragen werden, sondern daß derartige Dateninformationen auch von einer ersten Prozessoreinheit an alle anderen Prozessoreinheiten gleichzeitig gesendet werden können. Zu diesem Zweck muß die Schalteinheit die erste Prozessoreinheit mit allen anderen Prozessoreinheiten verbinden können, was einen großen schaltungstechnischen, wie auch programmtechnischen Aufwand erforderlich macht.

Aufgabe der Erfindung ist es, das Übertragen von Dateninformationen zu vereinfachen.

Diese Aufgabe ist erfindungsgemäß bei einem Computersystem der eingangs genannten Art dadurch gelöst, daß über den Verbindungsbus nicht nur Steuerinformationen, sondern auch Dateninformationen übertragen werden.

Auf diese Weise ist es nicht mehr erforderlich, daß die Schalteinheit die erste Prozessoreinheit mit allen anderen Prozessoreinheiten verbindet. Der damit verbundene schaltungstechnische und programmtechnische Aufwand ist nicht erforderlich. Statt dessen werden die zu übertragenden Dateninformationen von der sendenden Prozessoreinheit auf den Verbindungsbus gegeben, von dem alle anderen Prozessoreinheiten die Dateninformationen empfangen können.

Die beschriebene erfindungsgemäße Übertragung von Dateninformationen über den Verbindungsbus stellt gleichzeitig eine Umgehung der an sich für die Übertragung von Dateninformationen vorgesehenen Schalteinheit dar. Diese Umgehung der Schalteinheit kann vorteilhafterweise auch zum Testen, zur Fehlersuche, zur Initialisierung, oder dergleichen verwendet werden. Beispielsweise kann ein Fehler in der Schalteinheit durch eine derartige Umgehung leicht festgestellt werden.

Weitere Ausgestaltungen und Vorteile der Erfindung ergeben sich aus der nachfolgenden Beschreibung, die sich auf die Zeichnung bezieht. Die einzige Fig. der Zeichnung zeigt ein schematisches Blockschaltbild eines Computersystems mit zwei Prozessoreinheiten.

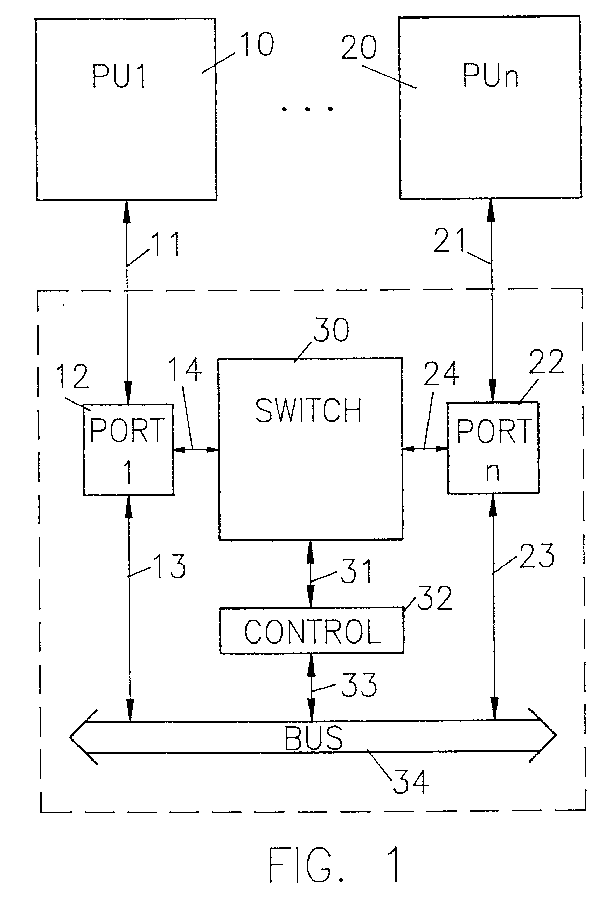

Bei dem Computersystem der Fig. 1 sind eine erste und eine zweite Prozessoreinheit (PU1, PUn) 10, 20 dargestellt, die eine Mehrzahl solcher Prozessoreinheiten repräsentieren sollen. Insgesamt handelt es sich somit um ein Mehrprozessor-Computersystem, wobei die einzelnen Prozessoreinheiten wiederum mehrere Prozessoren enthalten können.

Die erste Prozessoreinheit 1 ist über Verbindungsleitungen 11 mit einer Torschaltung (PORT 1) 12 verbunden. Entsprechend ist die zweite Prozessoreinheit 20 über Verbindungsleitungen 21 mit einer Torschaltung (PORT n) 22 verbunden. Weitere Prozessoreinheiten sind in gleicher Weise an entsprechende Torschaltungen angeschlossen.

Die Torschaltung 12 ist über weitere Verbindungsleitungen 13, 14 mit einem Verbindungsbus (BUS) 34 und einer Schalteinheit (SWITCH) 30 verbunden. Entsprechend ist die Torschaltung 22 über Verbindungsleitungen 23, 24 mit dem Verbindungsbus 34 und der Schalteinheit 30 verbunden. Weitere Torschaltungen sind in gleicher Weise angeschlossen.

Eine Steuereinheit (CONTROL) 32 ist über eine Verbindungsleitung 31 mit der Schalteinheit 30 und über eine Verbindungsleitung 33 mit dem Verbindungsbus 34 verbunden.

Sämtliche Torschaltungen 12, 22, die Schalteinheit 30, die Steuereinheit 32, der Verbindungsbus 34 sowie die jeweiligen Verbindungsleitungen 11, 21, 14, 24, 13, 23, 31, 33, bilden insgesamt eine Schnittstellen-Schaltung, die in der Fig. 1 innerhalb des gestrichelten Blocks angeordnet ist, und die der Übertragung von Informationen von einer sendenden Prozessoreinheit zu einer empfangenden Prozessoreinheit dient.

Eine derartige Übertragung von Informationen von der ersten Prozessoreinheit 10 zur zweiten Prozessoreinheit 20 erfolgt in der nachfolgend beschriebenen Art und Weise:
Die erste Prozessoreinheit 10 sendet Steuerinformationen an die Torschaltung 12, mit denen die erste Prozessoreinheit 10 eine Übertragung von Dateninformationen an die zweite Prozessoreinheit 20 anmeldet. Die Torschaltung 12 erkennt die empfangenen Signale als Steuerinformationen und gibt diese Steuerinformationen an den Verbindungsbus 34 weiter, sofern dieser nicht anderweitig belegt ist. Vom Verbindungsbus 34 gelangen diese Steuerinformationen zu der Steuereinheit 32 und über die Torschaltung 22 zu der zweiten Prozessoreinheit 20. Sofern diese zweite Prozessoreinheit 20 nicht belegt ist, gibt die Torschaltung 22 bereits im voraus stellvertretend für die zweite Prozessoreinheit 20 in der Form von weiteren Steuerinformationen eine Anwort über den Verbindungsbus 34 an die Torschaltung 12 zurück, mit der sie ihre Bereitschaft zum Empfang von Dateninformationen mitteilt. Diese weiteren Steuerinformationen gelangen über den Verbindungsbus 34 auch an die Steuereinheit 32. Die Steuereinheit 32 verfügt nunmehr über die Mitteilung der ersten Prozessoreinheit 10, daß diese Dateninformationen an die zweite Prozessoreinheit 20 senden will, sowie über die Antwort der zweiten Prozessoreinheit 20, daß diese für den Empfang von Dateninformationen bereit ist. Die Steuereinheit 32 steuert daraufhin die Schalteinheit 30 derart an, daß eine Verbindung zwischen der Torschaltung 12 über die Verbindungsleitungen 14, die Schalteinheit 30 und die Verbindungsleitungen 24 zu der Torschaltung 22 entsteht. Sobald diese Verbindung in der Schalteinheit 30 aufgebaut ist, wird dies von der ersten Prozessoreinheit 10 mittels sogenannter Pegelprotokolle erkannt. Die Prozessoreinheit 10 beginnt daraufhin mit dem Senden der zu übertragenden Dateninformationen. Diese Dateninformationen gelangen von der ersten Prozessoreinheit 10 über die Verbindungsleitungen 11, die Torschaltung 12, die Verbindungsleitungen 14, die Schalteinheit 30, die Verbindungsleitungen 24, die Torschaltung 22 und die Verbindungsleitungen 21 zu der zweiten Prozessoreinheit 20. Sobald sämtliche Dateninformationen übertagen sind, meldet dies die zweite Prozessoreinheit 20 in der Form von Steuerinformationen der Torschaltung 22. Diese Beendigung meldet die Torschaltung 22 über den Verbindungsbus 34 der Steuereinheit 32, worauf diese die Schalteinheit 30 für den Abbau der Verbindungen der Prozessoreinheit 10 und der Prozessoreinheit 20 ansteuert.

Die vorstehend beschriebene Übertragung von Dateninformationen erfolgt nur zwischen zwei Prozessoreinheiten. Die zu übertragenden Dateninformationen werden in diesem Fall, wie erläutert, über die Schalteinheit 30 und nicht über den Verbindungsbus 34 geführt.

Sollen nun Dateninformationen von einer ersten Prozessoreinheit 10 an alle anderen Prozessoreinheiten übertragen werden, so erfolgt dies auf die nachfolgend beschriebene Art und Weise:

Die erste Prozessoreinheit 10 sendet Steuerinformationen an die Torschaltung 12, mit denen sie mitteilt, daß sie Dateninformationen an alle anderen Prozessoreinheiten übertragen will. Zur Vereinfachung wird diese Art der Übertragung nachfolgend als Broadcast-Übertragung bezeichnet. Die Torschaltung 12 gibt die genannten Steuerinformationen auf den Verbindungsbus 34, so daß alle anderen Torschaltungen, wie auch die Steuereinheit 32 diese Steuerinformationen lesen können. Die anderen Torschaltungen, wie auch die Steuereinheit 32 erkennen aus den Steuerinformationen, daß es sich um eine Broadcast-Übertragung handelt. Für die Steuereinheit 32 hat dies zur Folge, daß keine Maßnahmen hinsichtlich der Schalteinheit 30 ausgelöst werden. Die anderen Torschaltungen prüfen den Zustand der jeweils zugehörigen Prozessoreinheit und geben eine Antwort in der Form von weiteren Steuerinformationen an den Verbindungsbus 34, sobald die jeweils zugeordnete Prozessoreinheit für den Empfang von Dateninformationen bereit ist. Die Torschaltung 12 überwacht den Verbindungsbus 34 im Hinblick auf die Antworten der anderen Torschaltungen. Sobald von allen anderen Torschaltungen Antworten dahingehend vorliegen, daß die jeweils zugeordneten Prozessoreinheiten für den Empfang von Dateninformationen bereit sind, teilt dies die Torschaltung 12 der ihr zugeordneten Prozessoreinheit 10 mit. Die Prozessoreinheit 10 sendet nunmehr die zu übertragenden Dateninformationen. Aufgrund der Fähigkeiten der Torschaltungen 12, 22, Broadcast-Übertragungen anhand der auf dem Verbindungsbus vorliegenden Steuerinformationen zu erkennen, ist es nunmehr möglich, den Datenfluß durch die Torschaltungen 12, 22 umzusteuern. Dies geschieht in der Weise, daß der Datenfluß von den jeweiligen Torschaltungen 12, 22 nicht zu der Schalteinheit 30 weitergeleitet wird, sondern zu dem Verbindungsbus 34. Dies bedeutet im beschriebenen Fall, daß die zu übertragenden Dateninformationen von der ersten Prozessoreinheit 10 über die Torschaltung 12 auf den Verbindungsbus 34 gelangen, von dem sie über die anderen Torschaltungen von allen anderen Prozessoreinheiten empfangen werden können. Nach Abschluß der Übertragung der Dateninformationen meldet dies die erste Prozessoreinheit 10 der Torschaltung 12, worauf diese entsprechende Steuerinformationen auf den Verbindungsbus 34 gibt, mit deren Hilfe die anderen Torschaltungen erkennen können, daß die Broadcast-Übertragung beendet ist.

Vorstehend erfolgt die Übertragung der Dateninformationen von einer sendenden Prozessoreinheit zu allen anderen angeschlossenen anderen Prozessoreinheiten. Die Übertragung der Dateninformationen wird dabei nicht über die Schalteinheit 30, sondern über den Verbindungsbus 34 vorgenommen. Bei einer derartigen Broadcast-Übertragung werden also Steuerinformationen, wie auch Dateninformationen über den Verbindungsbus 34 übertragen.

Es ist nun möglich, die beschriebene Übertragung von Dateninformationen über den Verbindungsbus 34 auch zu anderen Zwecken zu verwenden. Dies ergibt sich daraus, daß diese Übertragung von Dateninformationen über den Verbindungsbus 34 letztendlich eine Umgehung der Schalteinheit 30 darstellt. Zu Testzwecken, wie auch zu Zwecken der Fehlersuche ist es deshalb möglich, die Schalteinheit 30 auf diese Weise zu umgehen, und damit die Schalteinheit 30 zu testen. Weist die Schalteinheit 30 Fehlfunktionen auf, so ist es durch einen Vergleich der übertragenen Dateninformationen einerseits über die Schalteinheit 30 und andererseits unter Umgehung der Schalteinheit 30 über den Verbindungsbus 34 möglich, derartige Fehlfunktionen der Schalteinheit 30 zu erkennen und gegebenenfalls zu lokalisieren. Dabei ist natürlich eine Broadcast-Übertragung nicht erforderlich, sondern es genügt eine Übertragung von Dateninformation zwischen zwei Prozessoreinheiten.

## Patentansprüche

1. Computersystem mit wenigsten zwei Prozessoreinheiten (10, 20), die mit jeweils einer Torschaltung (12, 22) verbunden sind, die ihrerseits mit einer Schalteinheit (30) zur Übertragung von Dateninformationen und mit einem Verbindungsbus (34) zur Übertragung von Steuerinformationen und von Dateninformationen verbunden sind.

2. Computersystem nach Anspruch 1,
dadurch gekennzeichnet,
daß eine Steuereinheit (32) vorgesehen ist, die zur Übertragung von Steuerinformationen mit der Schalteinheit (30) und dem Verbindungsbus (34) verbunden ist.

3. Computersystem nach Anspruch 1 oder 2,
dadurch gekennzeichnet,
daß der Verbindungsbus (34) zur Übertragung von Dateninformationen von einer der Prozessoreinheiten an alle anderen Prozessoreinheiten verwendet wird.

4. Computersystem nach einem der Ansprüche 1 bis 3,
dadurch gekennzeichnet,
daß der Verbindungsbus (34) zur Übertragung von Dateninformationen zum Zwecke des Testens, der Fehlersuche, oder dergleichen verwendet wird.

5. Verfahren zum Übertragen von Steuerinformationen und Dateninformationen zwischen wenigstens zwei Prozessoreinheiten (10, 20) eines Computersystems, die mit jeweils einer Torschaltung (12, 22) verbunden sind, die ihrerseits mit einer Schalteinheit (30) zur Übertragung von Dateninformationen und mit einem Verbindungsbus (34) zur Übertragung von Steuerinformationen verbunden sind,
dadurch gekennzeichnet, daß
über den Verbindungsbus (34) auch Dateninformationen übertragen werden.

6. Verfahren nach Anspruch 5,
dadurch gekennzeichnet, daß
über den Verbindungsbus (34) Dateninformationen von einer der Prozessoreinheiten an alle anderen Prozessoreinheiten übertragen werden.
